# EUROPÄISCHE PATENTSCHRIFT

(11) **EP 3 598 597 B1**
(45) Veröffentlichungstag und Bekanntmachung des Hinweises auf die Patenterteilung: **07.06.2023**
(21) Anmeldenummer: 19186368.7
(22) Anmeldetag: 15.07.2019
(51) Int. Cl.: H02G 15/113, H01R 13/518, H01R 13/52, H01R 13/639, H02G 15/007, H02G 15/013

(54) **SICHERHEITSBOX MIT BEFESTIGUNGSMITTELN**
SECURITY BOX WITH FASTENING MEANS
BOÎTIER DE SÉCURITÉ POURVU DE MOYENS DE FIXATION

(30) Priorität: 21.07.2018 DE 102018005772
(43) Veröffentlichungstag der Anmeldung: 22.01.2020
(73) Patentinhaber: TKW Elektrotechnische Spezialkabel, Leitungen & Zubehör e.K., 40789 Monheim am Rhein (DE)
(72) Erfinder: WENDT, Torsten, 40789 Monheim am Rhein (DE)
(74) Vertreter: Schenkel, Bénédict

(56) Entgegenhaltungen:
- WO-A1-2007/012134
- DE-A1-102015 112 519
- US-A- 3 879 575
- Anonymous: "ProPlus 420358 Sicherheitsbox für CEE Stecker blau: Amazon.de: Auto", , 20. März 2018 (2018-03-20), XP055642430, Gefunden im Internet: URL:https://www.amazon.de/ProPlus-420358-S icherheitsbox-Stecker-blau/dp/B07BM97BK2 [gefunden am 2019-11-14]
- Anonymous: "Meister Safebox für Verlängerungskabel - IP55 Strahlwasserschutz - Für Kabel bis 9 mm Dicke - Schutz vor Nässe & Schmutz im Freien - Zugentlastung / Schutzkapsel für Kabel / Sicherheitsbox / 7436100: Amazon.de: Baumarkt", , 7. November 2013 (2013-11-07), XP055642349, Gefunden im Internet: URL:https://www.amazon.de/Meister-Safebox- Verlängerungskabel-Strahlwasserschutz-Sich erheitsbox/dp/B00GJP1UAO/ref=pd_sbs_60_1/2 62-3202444-2141723?_encoding=UTF8&pd_rd_i= B00GJP1UAO&pd_rd_r=1923cfc2-5c7b-48ff-947c -d9b462949931&pd_rd_w=HH31l&pd_rd_wg=Cr8iu &pf_rd_p=184816e4-edb5-4587-8faf-776e0027d 8d1&pf_rd_ [gefunden am 2019-11-14]

## Beschreibung

Die vorliegende Erfindung betrifft eine Sicherheitsbox zur Aufnahme einer Steckerverbindung, die aus einem Stecker und einer korrespondierenden Buchse im verbundenen Zustand gebildet ist, mit einem ersten und einem zweiten Gehäuseteil, die zu einem die Steckerverbindung umschließenden Gehäuse verbindbar sind, wobei das Gehäuse an seinen Endbereichen jeweils einen Kabeleinlass aufweist, durch den ein Kabel der Steckverbindung führbar ist.

Derartige Sicherheitsboxen werden beispielsweise im Bereich des Campings verwendet, um elektrische Steckerverbindungen gegen ein Eindringen von Feuchtigkeit und Nässe zu schützen. Hierbei handelt es sich typischerweise um einphasige Steckerverbindungen für beispielsweise in Europa übliche 230V Wechselstrom, wie sie im Haushaltsbereich Verwendung finden. Entsprechende Stecker und Buchsen sind international in verschiedenen Ausgestaltungen normiert und entsprechend verwendbar.

Sicherheitsboxen sind unter Anderem aus WO 2007/012134 A1, DE 10 2015 112519 A1 und US 3 879 575 A bekannt. Ferner sind Sicherheitsboxen beispielsweise unter dem Namen "Meister Safebox für Verlängerungskabel" von Amazon.de bekannt (XP055642349; https://www.amazon.de/Meister-Safebox-Verl%C3%A4ngerungskabel-Strahlwasserschutz-Sicherheitsbox/dp/B00GJP1UAO/ref=pd_sbs_60_1/262-3202444-2141723?_encoding=UTF8&pd_rd_i=BOOGJPlUAO&pd_rd_r=1923cfc2-5c7b-48ff-947cd9b462949931&pd_rd_w=HH311&pd_rd_wg=Cr8iu&pf_rd_p=184816e4-edb5-4587-8faf-776e0027d8d1&pf_rd_r=G1JPWXOGDHN3K2D6WB60&psc=1&refRID=G1JP WXOGDHN3K2D6WB60).

Die Sicherheitsboxen ermöglichen eine Verwendung der haushaltsüblichen Stecker und Buchsen auch im Außenbereich, d.h. unter Einfluss insbesondere von Feuchtigkeit. Die Feuchtigkeit kann dabei in Form von Luftfeuchtigkeit wie auch von Regen auftreten. Prinzipiell sind zwar auch Steckerverbindungen für eine Verwendung in einem Außenbereich bekannt. Allerdings sind diese Steckerverbindungen für eine dauerhafte Nutzung im Außenbereich nur eingeschränkt geeignet.

Auch bekannte Sicherheitsboxen weisen das Problem auf, dass ein Schutz gegen ein Eindringen von Feuchtigkeit nur bedingt gewährleistet wird. Dies gilt auch hier insbesondere für eine dauerhafte Verwendung. Entsprechend werden bei einer Verwendung beispielsweise auf Baustellen oder ähnlichen teilweise zusätzliche Maßnahmen unternommen, die allerdings insgesamt keine befriedigende Lösung darstellen und sicherheitstechnisch nicht empfehlenswert oder gar bedenklich sind.

Dieses Problem kann dadurch verstärkt werden, dass sich auf dem Boden Pfützen bilden. Wenn eine Sicherheitsbox auf dem Boden liegt und sich dort eine Pfütze bildet, ist meist nur ein eingeschränkter Schutz gegen ein Eindringen von Feuchtigkeit gegeben. Eine entsprechende Problematik gibt es auch für dreiphasige Steckerverbindung für 380V/400V-Drehstrom. Zwar sind entsprechende Stecker und Buchsen bekannt, die für eine Verwendung im Außenbereich prinzipiell geeignet sind. Allerdings können auch hier im länger anhaltenden Einsatz Problem durch das Eindringen von Feuchtigkeit auftreten.

Ausgehend von dem oben genannten Stand der Technik liegt der Erfindung somit die Aufgabe zugrunde, eine Sicherheitsbox der oben genannten Art anzugeben, die einen zuverlässigen Schutz gegen Eindringen von Feuchtigkeit auch über einen längeren Zeitraum gewährleistet, insbesondere für dreiphasige Steckerverbindungen für 380V/400V-Drehstrom.

Die Lösung der Aufgabe erfolgt erfindungsgemäß durch die Merkmale des unabhängigen Anspruchs 1. Vorteilhafte Ausgestaltungen der Erfindung sind in den Unteransprüchen angegeben.

Erfindungsgemäß ist somit eine Sicherheitsbox zur Aufnahme einer Steckerverbindung, die aus einem Stecker und einer korrespondierenden Buchse im verbundenen Zustand gebildet ist, insbesondere für eine Steckerverbindung für 380V/400V-Drehstrom mit drei Phasen, vorgesehen, mit einem ersten und einem zweiten Gehäuseteil, die zu einem die Steckerverbindung umschließenden Gehäuse verbindbar sind, wobei das Gehäuse an seinen Endbereichen jeweils einen Kabeleinlass aufweist, durch den ein Kabel der Steckverbindung führbar ist, wobei an dem ersten und/oder dem zweiten Gehäuseteil im Bereich der Kabeleinlässe jeweils außenseitig Befestigungsmittel ausgebildet und/oder anbringbar sind, mit denen das erste und das zweite Gehäuseteil aneinander befestigbar sind, wobei an den Kabeleinlässen innenseitig jeweils ein Dichtelement angeordnet ist, welches im verschlossenen Zustand eine Abdichtung des Gehäuses an dem Kabel bewirkt, wobei an den Kabeleinlässen innenseitig jeweils eine Dichtelementaufnahme ausgebildet ist, und das Dichtelement austauschbar in der Dichtmittelaufnahme gehalten ist, wobei an dem ersten und dem zweiten Gehäuseteil jeweils Positionierstifte ausgebildet sind, die sich in das Dichtelement hinein erstrecken.

Grundidee der vorliegenden Erfindung ist es also, eine zuverlässige Abdichtung der Sicherheitsbox bereitzustellen, indem durch die Befestigungsmittel die Sicherheitsbox im Bereich der Kabeleinlässe zuverlässig abgedichtet wird. In der Praxis hat sich nämlich herausgestellt, dass die Kabeleinlässe üblicherweise eine Schwachstelle für die Abdichtung bilden. Dieses Problem wird dadurch verstärkt, wenn die Sicherheitsbox für Kabel mit unterschiedlichen Kabeldurchmessern verwendet wird. Durch das Ausbilden der Befestigungsmittel außenseitig an dem ersten und zweiten Gehäuseteil kann im Bereich der Kabeleinlässe die Verbindung der Gehäuseteile besonders fest und zuverlässig gestaltet werden. Ein Aufspreizen der Sicherheitsbox im Bereich der Kabeleinlässe, wie sie beim Verbinden des ersten und zweiten Gehäuseteils in einem Mittelbereich auftreten kann, wird vermieden. Beim zusätzlichen Verbinden im Mittelbereich kann dem Aufspreizen der Sicherheitsbox im Bereich der Kabeleinlässe durch die Befestigungsmittel entgegengewirkt werden.

Die Steckerverbindung ist vorzugsweise für 380V/400V-Drehstrom mit drei Phasen ausgeführt. Zusätzlich kann die Steckerverbindung einen Nullleiter und einen Schutzleiter aufweisen, so dass sich üblicherweise eine Steckerverbindung mit fünf Kontakten ergibt entsprechende Stecker und Buchsen sind beispielsweise nach CEE16 für 400V und 16A, nach CEE32 für 400V und 32A oder nach CEE63 für 400V und 63A für Deutschland und die europäische Union normiert. Alternativ gibt es auch Stecker und Buchsen nach beispielsweise einer Schweizer Norm. Durch die Normung wird das Bereitstellen der Sicherheitsbox erleichtert, da neben anderen Eigenschaften auch Abmessungen der Stecker und Buchsen festgelegt sind, so dass die Sicherheitsbox daran angepasst werden kann.

Das Gehäuse ist wasserundurchlässig und umschließt die Steckerverbindung im geschlossenen Zustand vollständig. Die Gehäuseteile sind als zwei Gehäusehälften ausgeführt, die jeweils etwa 180° eines Kreisumfangs abdecken.

Die Kabeleinlässe sind als Durchführungen für die zu dem Stecker und der Buchse führende Kabel ausgebildet.

Die Sicherheitsbox ist vorzugsweise aus Kunststoff hergestellt. Besonders bevorzugt ist die Sicherheitsbox durch Spritzgießen hergestellt. Vorzugsweise ist die Sicherheitsbox zumindest teilweise aus Polypropylen (PP) gefertigt. Polypropylen ist ein thermoplastischer Kunststoff, der einfach verarbeitet werden kann. Außerdem weist Polypropylen eine gute Festigkeit und Hitzebeständigkeit auf und ist als elektrischer Isolator gut für eine Verwendung in elektrischen Installationen geeignet.

Weiter bevorzugt ist die Sicherheitsbox halogenfrei. Dies ist im Brandfall vorteilhaft, damit keine Halogene freigesetzt werden. Im Brandfall entstehen beispielsweise bei PVC-Materialien Säuren und Säuredämpfe, die Metalle zerfressen. Durch die Verwendung halogenfreier Materialien können somit insbesondere Folgeschäden bei Bränden reduziert werden.

Auch ist die Sicherheitsbox vorzugsweise selbstverlöschend. Diese Anforderung geht über die normative Mindestanforderung "schwer entflammbar" hinaus und stellt einen zusätzlichen Schutz bei der Verwendung der Sicherheitsbox dar. Der Nachweis der selbstverlöschenden Eigenschaft erfolgt beispielsweise durch eine Glühdrahtprüfung bei einer Temperatur von 750° C.

Bevorzugt weist das Gehäuse eine Wanddicke in einem Bereich von größer oder gleich 1 mm bis kleiner oder gleich 5 mm auf, vorzugsweise von größer oder gleich 2 mm bis kleiner oder gleich 4 mm. Dadurch kann erreicht werden, dass die Sicherheitsbox einerseits leicht ist und andererseits eine ausreichende Festigkeit aufweist. Somit kann die Sicherheitsbox besonders formstabil sein. Beispielsweise kann die Sicherheitsbox einen IK-Stoßfestigkeitsgrad nach IEC 62262 von zumindest IK10, besonders bevorzugt von IK20 aufweisen. Die Sicherheitsbox kann somit mit einem gesicherten Steckverbinder im Inneren eine Gewichtslast von mindestens 500 kg aushalten, ohne sich irreversibel zu verformen. Dadurch kann die Sicherheitsbox beispielsweise ein Überfahren mit einem Fahrzeug aushalten, ohne dass die Sicherheitsbox oder der Steckverbinder darin Schaden erleiden. Das ist besonders von Vorteil, wenn die Sicherheitsbox an Orten eingesetzt wird, an denen keine Möglichkeit zum Aufhängen der Box besteht.

Die Sicherheitsbox umschließt bevorzugt ein Volumen in einem Bereich von größer oder gleich 0,002 m³ bis kleiner oder gleich 0,004 m³, insbesondere von größer oder gleich 0,0025 m³ bis kleiner oder gleich 0,003 m³. Dadurch kann die Sicherheitsbox ausreichend Platz für die Aufnahme von Stecker und Buchse aufweisen, insbesondere von Stecker und Buchse nach CEE16A für 400V nach CEE32A für 400V.

In vorteilhafter Ausgestaltung der Erfindung weisen die Befestigungsmittel ein Eingriffselement und eine korrespondierende Aussparung auf, die entsprechend an dem ersten und zweiten Gehäuseteil ausgebildet sind. Die Befestigungsmittel werden beispielsweise verbunden, indem das Eingriffselement in die Aussparung eingeführt wird. Eingriffselement und Aussparung ermöglichen eine zuverlässige Befestigung der beiden Gehäusehälften an den Kabeleinlässen.

In vorteilhafter Ausgestaltung der Erfindung weist das erste oder zweite Gehäuseteil eine Befestigungslasche auf, die sich in einem Winkel von wenigstens etwa 90° in Umfangsrichtung um das Kabel erstreckt, und das Eingriffselement oder die Aussparung ist an einem freien Ende der Befestigungslasche ausgebildet. Durch die Befestigungslasche kann eine sehr zuverlässige Befestigung der beiden Gehäuseteile erreicht werden, da beim Öffnen des Gehäuses auftretende Kräfte gut von den Befestigungsmitteln aufgenommen und in das Gehäuse eingeleitet werden können.

In vorteilhafter Ausgestaltung der Erfindung ist zumindest eine Befestigungslasche in einem Bereich zwischen den Endbereichen des Gehäuses angeordnet, vorzugsweise zentral. Dabei kann vorgesehen sein, dass die Befestigungslasche in axialer Richtung des Kabels eine Länge von größer oder gleich einem Viertel der Länge der Sicherheitsbox aufweist. Dadurch kann in einem zentralen Bereich der Sicherheitsbox eine besonders zuverlässige Befestigung der beiden Gehäusehälften erreicht werden.

In vorteilhafter Ausgestaltung der Erfindung weisen die Befestigungsmittel Trennmittel zum Trennen der Befestigungsmittel auf. Die Trennmittel können abhängig von der Art und Ausgestaltung der Befestigungsmittel unterschiedliche ausgeführt sein, um die Befestigungsmittel zu trennen. So können die Trennmittel beispielsweise eine Ausbuchtung umfassen, die beispielsweise in dem Gehäuse im Bereich einer Verbindung der Befestigungsmittel ausgebildet ist. Alternativ oder zusätzlich können an den Befestigungsmitteln beispielsweise Vorsprünge als Grifferleichterungen angeformt sein, so dass die Befestigungsmittel einfach aus ihrem befestigten Zustand gelöst werden können.

In vorteilhafter Ausgestaltung der Erfindung weisen die Befestigungsmittel Eingriffsmittel, die an dem ersten und/oder dem zweiten Gehäuseteil ausgebildet sind, und ein Klammerelement, das die Eingriffsmittel in einem aneinander befestigten Zustand hintergreift und an dem ersten oder dem zweiten Gehäuseteil anliegt, auf. Durch das Klammerelement können das erste und das zweite Gehäuseteil im Bereich des jeweiligen Kabeleinlasses zuverlässig miteinander verbunden werden. Das Klammerelement ist an den Eingriffsmitteln gehalten. Die Eingriffsmittel können beispielsweise an einem der beiden Gehäuseteile angebracht sein, und das entsprechend andere Gehäuseteil kann von dem Klammerelement umgriffen werden, wodurch die beiden Gehäuseteile im Bereich des jeweiligen Kabeleinlasses aneinander gehalten werden. Das Klammerelement ist hier vorzugsweise als separates Klammerelement ausgeführt. Alternativ kann das Klammerelement fest am den entsprechenden Gehäuseteil angebracht sein, so dass es verliersicher gehalten ist. Das Klammerelement kann beispielsweise aus Metall oder aus Kunststoff hergestellt sein.

Vorteilhafter weise kann durch die vorbeschriebenen Klammerelemente erreicht werden, dass das erste und das zweite Gehäuseteil im Bereich der Kabeleinlasse besonders gut miteinander verbunden werden. Ferner können durch derartige Klammerelemente die Gehäuseteile derart aufeinandergepresst werden, dass die Gehäuseteile auch in dem Bereich zwischen den beiden Endbereichen des Gehäuses besonders gut aufeinandergedrückt werden. Dies ist besonders bei großen Sicherheitsboxen von Vorteil, wie beispielsweise bei Sicherheitsboxen für Steckverbinder für 380V/400V-Drehstrom mit drei Phasen, da diese auf Grund der Größe der zu sichernden Steckverbinder einen besonders großen Abstand zwischen den beiden Kabeleinlässen aufweisen, der besonders schwierig abzudichten ist. Wenn das Klammerelement als separates Klammerelement ausgeführt ist, kann das Klammerelement vorteilhafter weise austauschbar sein. Somit kann das Klammerelement beispielsweise bei Verschleiß einfach ausgetauscht werden, ohne die ganze Sicherheitsbox austauschen zu müssen. Somit kann das Klammerelement auch derart ausgeführt sein, dass es die beiden Gehäusehälften besonders fest aufeinanderpresst.

In vorteilhafter Ausgestaltung der Erfindung sind die Eingriffsmittel schienenartig ausgebildet, und das Klammerelement hintergreift die Eingriffsmittel durch eine axiale Verschiebung. Eine solche Verschiebung des Klammerelements kann einfach und ohne große Kraftanstrengung durchgeführt werden. Gegenüber einer Schnappverbindung kann das Klammerelement durch die axiale Verschiebung insbesondere leicht gelöst werden, um die Sicherheitsbox zu öffnen.

In weiter vorteilhafter Ausgestaltung der Erfindung sind die Eingriffsmittel jeweils korrespondierend an beiden Gehäuseteilen in Verbindungsbereichen davon ausgebildet, und das Klammerelement weist an seinen beiden Enden eine Klaue auf, die ausgeführt ist, jeweils die korrespondierenden Eingriffsmittel an beiden Gehäuseteilen zu umgreifen. Die beiden Gehäuseteile werden also bereits durch die Anbringung der beiden Klauen miteinander verbunden. Die Verbindung der beiden Klauen über einen Bügel des Klammerelements bildet eine zusätzlich verbesserte Verbindung der beiden Gehäuseteile. Vorzugsweise kann das Klammerelement an den Eingriffsmitteln angebracht werden, wobei es wahlweise das eine oder das andere Gehäuseteil umgreift. Die Anbringung des Klammerelements kann somit vereinfacht werden, indem das Klammerelement in einer beliebigen Richtung angebracht werden kann.

In einer besonders bevorzugten Ausgestaltung ist vorgesehen, dass die schienenartig ausgebildeten Eingriffsmittel in axialer Richtung eine Verjüngung aufweisen, so dass das Klammerelement axial, vorzugsweise mit den beiden Klauen, über die Verjüngung auf die Eingriffsmittel verschiebbar ist. Dadurch kann das Klammerelement besonders einfach auf die Eingriffsmittel verschoben werden. Besonders bevorzugt können die Eingriffsmittel einen im Vergleich zu den korrespondierenden Bereichen der beiden Klauen des Klammerelements größeren Querschnitt aufweisen. Das Klammerelement kann demnach die Eingriffsmittel über die beiden Klauen mit einer Presspassung umgreifen. Somit können die Gehäuseteile besonders gut aufeinandergepresst werden. Dies ist ebenfalls besonders bei großen Sicherheitsboxen von Vorteil.

Besonders bevorzugt ist das Klammerelement zwischen einer verriegelten und einer entriegelten Position verschiebbar. Dabei kann bevorzugt vorgesehen sein, dass auf der Außenseite von einem Gehäuseteil ein Rastelement angeordnet ist, das mit einem am Bügel des Klammerelements angeordneten korrespondierenden Rastelement in der verriegelten und der entriegelten Position formschlüssig in axialer Richtung verbindbar ist. Dadurch kann erreicht werden, dass das Klammerelement einfach in die verriegelte und die entriegelte Position eingerastet werden kann.

In einer besonders bevorzugten Ausgestaltung der Erfindung weist die Sicherheitsbox als Befestigungsmittel im Bereich der Kabeleinlässe die vorbeschriebenen Befestigungsmittel mit Eingriffsmittel und Klammerelement auf und die zumindest eine Befestigungslasche in dem Bereich zwischen den Endbereichen des Gehäuses. Besonders bevorzugt weisen die Befestigungsmittel im Bereich der Kabeleinlässe dabei keine Befestigungslasche auf.

In vorteilhafter Ausgestaltung der Erfindung weist das Gehäuse in einem Mittelbereich zwischen den Kabeleinlässen einen Querschnitt zur Aufnahme der Steckerverbindung und an den Kabeleinlässen einen gegenüber dem Mittelbereich reduzierten Querschnitt auf. Dadurch kann das Gehäuse mit einem geringen Materialeinsatz hergestellt werden. Vorzugsweise ist das Gehäuse dabei so ausgeführt, dass es sich in Richtung zu den Kabeleinlässen verjüngt. Durch den geringen Umfang im Bereich der Kabeleinlässe kann dort durch die Befestigungsmittel eine gute Abdichtung des Kabels gegenüber dem Gehäuse erreicht werden.

An den Kabeleinlässen ist innenseitig jeweils ein Dichtelement angeordnet, welches im verschlossenen Zustand eine Abdichtung des Gehäuses an dem Kabel bewirkt. Dadurch kann an den Kabeleinlässen eine besonders zuverlässige Abdichtung der Sicherheitsbox bewirkt werden. Vorzugsweise ist das jeweilige Dichtelement elastisch, um eine möglichst zuverlässige Anpassung an das Kabel zu bewirken. Dabei kann das jeweilige Dichtelement einen Toleranzausgleich bewirken. Das jeweilige Dichtelement ist besonders bevorzugt angepasst an einen jeweiligen Kabelquerschnitt. Um das jeweilige Dichtelement zuverlässig zu positionieren, sind an dem ersten und dem zweiten Gehäuseteil jeweils Positionierstifte ausgebildet, die sich in das Dichtelement hinein erstrecken, vorzugsweise in einer Richtung parallel zueinander. Durch die Positionierstifte können auch dicke Dichtelemente zuverlässig positioniert werden. Vorteilhaft ist dabei, dass sich dicke Dichtelemente gut an verschiedene Kabeldurchmesser anpassen.

An den Kabeleinlässen ist innenseitig jeweils eine Dichtelementaufnahme ausgebildet, und das Dichtelement ist austauschbar in der Dichtmittelaufnahme gehalten. Das Dichtelement ist also jeweils austauschbar, um das jeweilige Dichtelement beispielsweise bei Verschleiß, Alterung oder Beschädigung einfach austauschen zu können. Ein weiterer Vorteil ergibt sich bei der Verwendung von unterschiedlichen Dichtelementen, die jeweils für unterschiedliche Kabeldurchmesser angepasst sind. Somit kann unabhängig von dem jeweiligen Kabeldurchmesser jeweils eine zuverlässige Abdichtung des Kabels an den Kabeleinlässen mit einem daran angepassten Dichtelement erreicht werden.

In vorteilhafter Ausgestaltung der Erfindung ist an dem ersten und/oder dem zweiten Gehäuseteil wenigstens ein Halter für ein Dichtelement ausgebildet. Der wenigstens eine Halter ist vorzugsweise innenseitig an dem Gehäuse angebracht. Über den wenigstens einen Halter kann eine entsprechende Anzahl Dichtelemente in dem Gehäuse der Sicherheitsbox bevorratet werden. Die verschiedenen Dichtelemente sind vorzugsweise zur Abdichtung von Kabeln mit unterschiedlichen Kabeldurchmessern ausgeführt. Damit kann auch bei unterschiedlichen Kabeldurchmessern eine zuverlässige Abdichtung der Steckerverbindung gegen das Eindringen von Feuchtigkeit erreicht werden, indem das jeweils passende Dichtelement ausgewählt und in die Dichtelementaufnahme eingesetzt wird. Prinzipiell kann aber auch lediglich wenigstens ein Dichtelement in dem Halter als Ersatz vorgehalten werden. Besonders bevorzugt sind Halter vorgesehen, um die Dichtelemente paarweise für die beiden Kabeleinlässe vorzuhalten, wobei an den Kabeleinlässen an dem ersten und zweiten Gehäuseteil jeweils ein Dichtelement angebracht ist. In letztem Fall sind also jeweils vier Dichtelemente erforderlich. Besonders bevorzugt sind die Dichtelemente in der jeweiligen Dichtelementaufnahme an dem ersten und/oder dem zweiten Gehäuseteil mit Positionierstiften, die sich in das Dichtelement hinein erstrecken, ausgeführt. Dabei sind entsprechend geformte und ausgerichtete Positionierstifte als Halter vorgesehen.

In vorteilhafter Ausgestaltung der Erfindung sind das erste und das zweite Gehäuseteil verschwenkbar aneinander gehalten. Dies ermöglicht eine einfache Handhabung der Sicherheitsbox, da eine korrekte Positionierung des ersten und des zweiten Gehäuseteils automatische erfolgt. Vorzugsweise sind das erste und das zweite Gehäuseteil über Filmscharniere miteinander verschwenkbar verbunden. Dabei ist besonders bevorzugt, dass die Sicherheitsbox aus einem Material wie beispielsweise Polypropylen (PP) gefertigt ist. Polypropylen ist ein Material, welches für die Scharniere, die das erste und das zweite Gehäuseteil miteinander verbinden, eine hohe Lebensdauer ermöglicht.

In einer bevorzugten Ausgestaltung ist vorgesehen, dass die beiden Gehäuseteile zusammen einteilig ausgestaltet sind. Dadurch kann erreicht werden, dass die Gehäuseteile nicht verloren gehen oder vertauscht werden.

In vorteilhafter Ausgestaltung der Erfindung ist an dem ersten und/oder dem zweiten Gehäuseteil eine Gehäusedichtung angebracht oder ausgebildet, die eine Abdichtung des Gehäuses im Bereich zwischen dem ersten und zweiten Gehäuseteil bewirkt. Die Gehäusedichtung ist beispielsweise als umlaufende Dichtung ausgeführt, die das erste und das zweite Gehäuseteil gegen ein Eindringen von Feuchtigkeit schützt. Prinzipiell kann die Gehäusedichtung auch eine Mehrzahl Einzeldichtungen umfassen, die gemeinsam die Abdichtung des Gehäuses zwischen dem ersten und dem zweiten Gehäuseteil bewirken. Auch kann die Gehäusedichtung integral mit Dichtelementen an den Kabeleinlässen ausgeführt sein. Alternativ kann vorgesehen sein, dass die Gehäusedichtung zumindest an den Dichtelementen an den Kabeleinlässen anliegend ausgestaltet ist. Somit kann erreicht werden, dass die Dichtelemente separat von der Gehäusedichtung austauschbar sind. Die Gehäusedichtung ist weiter bevorzugt an dem ersten oder dem zweiten Gehäuseteil angebracht oder ausgebildet, und das entsprechend andere Gehäuseteil weist korrespondierende Dichtflächen auf, die eine Abdichtung der Sicherheitsbox im geschlossenen Zustand bilden.

In einer vorteilhaften Ausgestaltung der Erfindung ist vorgesehen, dass die Gehäusedichtung in einer zumindest teilweise umlaufenden Nut angebracht oder ausgebildet ist. Dadurch kann die Gehäusedichtung einfach austauschbar sein.

Ferner ist in einer vorteilhaften Ausgestaltung der Erfindung vorgesehen, dass in der umlaufenden Nut zumindest eine Belüftungsöffnung angebracht ist, vorzugsweise eine Vielzahl von Belüftungsöffnungen. Die Belüftungsöffnungen werden dabei von der Gehäusedichtung abgedeckt, so dass eine membranartige Belüftung entsteht.

In vorteilhafter Ausgestaltung der Erfindung sind an dem ersten und/oder dem zweiten Gehäuseteil Aufhängemittel angebracht. Mit den Aufhängemitteln kann die Sicherheitsbox für die Verwendung aufgehängt werden, so dass insbesondere bei stehendem Wasser ein zusätzlicher Schutz gegen das Eindringen von Feuchtigkeit geschaffen wird. Ein dauerhafter Kontakt mit stehendem Wasser kann somit vermieden werden, wodurch die Betriebssicherheit verbessert wird. Die Aufhängemittel können eine oder mehrere Ösen umfassen, mit denen die Sicherheitsbox beispielsweise an Haken aufgehängt werden kann. Ösen können platzsparend an dem Gehäuse angeformt werden. Alternativ können die Aufhängemittel Haken oder Schlaufen umfassen, die an dem ersten und/oder dem zweiten Gehäuseteil angeordnet sind. Dies ermöglicht eine Aufhängung der Sicherheitsbox ohne zusätzliche Hilfsmittel. Wenn an dem ersten und/oder dem zweiten Gehäuseteil in axialer Richtung des Kabels bzw. der Sicherheitsbox beabstandet Aufhängemittel angeordnet sind, kann die Sicherheitsbox einfach horizontal aufgehängt werden, so dass Regen nicht unmittelbar auf einen der Kabeleinlässe fallen kann. Besonders bevorzugt weist das Gehäuseteil deshalb zumindest zwei beabstandete Aufhängemittel in axialer Richtung des Kabels auf. Außerdem können durch das Aufhängen der Sicherheitsbox mechanische Belastungen, wie sie beispielsweise bei einem Überfahren der auf dem Boden liegenden Sicherheitsbox auftreten können, verhindert werden. Entsprechendes gilt auch für ein Drauftreten durch Personen.

In vorteilhafter Ausgestaltung der Erfindung ist an dem ersten und/oder dem zweiten Gehäuseteil innenseitig wenigstens ein Positionierelement ausgebildet, in der die Steckerverbindung positionierbar ist. Das Positionierelement kann beispielsweise als Positioniersteg ausgeführt sein, der sich quer zur Längsachse des Kabels bzw. der Steckerverbindung erstreckt. Durch eine Mehrzahl solcher Positionierstege kann die Steckerverbindung zuverlässig beispielsweise in dem einen Gehäuseteil abgestützt werden, und durch entsprechende Positionierstege des anderen Gehäuseteils formschlüssig gehalten werden. Somit wird die Steckerverbindung sicher in der Sicherheitsbox gehalten. Spiel zwischen der Steckerverbindung und dem Gehäuse wird reduziert, wodurch eine effektive Halterung gebildet wird. Außerdem wird die Gefahr von Beschädigungen der Sicherheitsbox oder auch der Steckerverbindung in dem Gehäuse reduziert.

Bevorzugt sind die Positionierelemente dabei so ausgebildet, dass verschiedene Steckerverbindungen in dem Gehäuse formschlüssig positionierbar sind.

In vorteilhafter Ausgestaltung der Erfindung sind an dem ersten und/oder dem zweiten Gehäuseteil innenseitig eine Mehrzahl Positionierelemente ausgebildet, die eine Zugentlastung für die darin positionierte Steckerverbindung bilden. Durch die Zugentlastung wird ein versehentliches Auftrennen der Steckerverbindung verhindert. Die Zugentlastung kann beispielsweise realisiert sein, indem sowohl der Stecker als auch die Buchse von einem Positionierelement in Richtung zu dem jeweiligen Kabeleinlass abgestützt sind. Auf die Steckerverbindung wirkenden Zugkräfte werden dann über das Gehäuse aufgenommen.

In einer alternativen bevorzugten Ausgestaltung ist vorgesehen, dass die Positionierelemente keine Zugentlastung bilden. Dadurch können die Positionierelemente besonders frei gestaltet werden, so dass eine Ausgestaltung, die sich für eine Vielzahl verschiedener Stecker eignet, einfacher zu erreichen ist. In vorteilhafter Ausgestaltung der Erfindung sind an dem ersten und dem zweiten Gehäuseteil außenseitig korrespondierende Sicherungsmittel ausgebildet, mit denen das erste und das zweite Gehäuseteil gegen ein Öffnen des Gehäuses gesichert werden können. Die Sicherungsmittel können beispielsweise ein korrespondierendes paar Sicherungsösen umfassen, die im zu dem Gehäuse verbundenen Zustand in Anlage kommen, so dass ein Sicherungselement, beispielsweise nach der Art eines Vorhängeschlosses, das Gehäuse gegen nicht autorisiertes Öffnen sichern kann. Besonders bevorzugt umfasst das erste oder das zweite Gehäuseteil eine Verschlusslasche oder eine Befestigungslasche, mit der das Gehäuse verbindbar ist, und die Sicherungsmittel sind an dem entsprechenden Gehäuseteil an der Verschlusslasche oder der Befestigungslasche und an dem anderen Gehäuseteil korrespondierend zu der Verschlusslasche oder der Befestigungslasche im verbundenen Zustand angebracht.

In vorteilhafter Ausgestaltung der Erfindung weist das Gehäuse in seinem Mittelbereich eine Auswölbung zur Aufnahme einer Verschlussklappe der Buchse der Steckerverbindung auf. Entsprechende Verschlusskappen sind insbesondere im Bereich der Buchsen für 380V/400V-Drehstrom mit drei Phasen üblich, um einen Berührschutz zu realisieren und auch ein Eindringen von Feuchtigkeit in eine nicht benutzte Buchse zu verhindern. Dies stellt besondere Herausforderungen an die Sicherheitsbox, da hier ein entsprechender zusätzlicher Raum vorgehalten werden muss, um die Aufnahme eines entsprechenden Steckers bzw. einer entsprechenden Buchse zu realisieren.

In einer vorteilhaften Ausgestaltung der Erfindung ist vorgesehen, dass der an dem ersten und/oder dem zweiten Gehäuseteil ausgebildeten Halter für ein Dichtelement in der Auswölbung zur Aufnahme einer Verschlussklappe der Buchse der Steckverbindung angeordnet ist. Somit kann der für die Aufnahme der Verschlussklappe ausgewölbte Bereich zusätzlich genutzt werden. Ferner kann der Halter für ein Dichtelement somit ausreichend Platz für eine Vielzahl von Dichtelementen aufweisen. Bevorzugt ist der Halter für ein Dichtelement in der Auswölbung in axialer Richtung Versetzt von der Mitte der Sicherheitsbox angeordnet.

In einer vorteilhaften Ausgestaltung der Erfindung ist vorgesehen, dass das erste und/oder das zweite Gehäuseteil einen Lufteinlass aufweist, vorzugsweise einen absperrbaren Lufteinlass. Beispielsweise kann das erste und/oder das zweite Gehäuseteil ein Luftventil aufweisen. Besonders bevorzugt ist das Luftventil ein Rückschlagventil, wobei das Rückschlagventil für einen Lufteinlass in die Sicherheitsbox konfiguriert ist. Somit kann Luft in die Sicherheitsbox eingeblasen werden, insbesondere im verschlossenen Zustand, wodurch Feuchtigkeit entweichen kann. Beispielsweise kann die eingeblasene Luft durch die Belüftungsöffnungen in der umlaufenden Nut austreten und Feuchtigkeit aus der Sicherheitsbox austragen.

Nachfolgend wird die Erfindung unter Bezugnahme auf die anliegende Zeichnung anhand bevorzugter Ausführungsformen näher erläutert.

Es zeigen
- Fig. 1: eine perspektivische Darstellung einer Sicherheitsbox gemäß einer ersten, bevorzugten Ausführungsform in einem geöffneten Zustand in einer Ansicht seitlich von oben,
- Fig. 2: eine perspektivische Darstellung der Sicherheitsbox aus Fig. 1 in dem geöffneten Zustand in einer Ansicht seitlich von unten,
- Fig. 3: eine Darstellung der Sicherheitsbox aus Fig. 1 in dem geöffneten Zustand in einer Ansicht von einer Stirnseite der Sicherheitsbox,
- Fig. 4: eine Darstellung der Sicherheitsbox aus Fig. 1 in einem geschlossenen Zustand in einer Ansicht seitlich von oben,
- Fig. 5: eine Detaildarstellung eines ersten Gehäuseteils der Sicherheitsbox aus Fig. 1 in dem geöffneten Zustand mit einer Mehrzahl in darin gehaltener Dichtelemente in einer Ansicht seitlich von oben,
- Fig. 6: eine perspektivische Darstellung der Sicherheitsbox aus Fig. 1 in dem geöffneten Zustand mit einer darin positionierten ersten Steckerverbindung in einer Ansicht seitlich von oben,
- Fig. 7: eine perspektivische Darstellung der Sicherheitsbox aus Fig. 1 in dem geöffneten Zustand mit einer darin positionierten zweiten Steckerverbindung in einer Ansicht seitlich von oben,
- Fig. 8: eine perspektivische Darstellung einer Sicherheitsbox gemäß einer zweiten Ausführungsform in einem geschlossenen Zustand in einer Ansicht von oben,
- Fig. 9: eine teilweise Darstellung der Sicherheitsbox aus Fig. 8 in einem geöffneten Zustand in einer Ansicht auf einen Innenraum der Sicherheitsbox in einem Bereich eines Kabeleinlasses,
- Fig. 10: eine teilweise Darstellung der Sicherheitsbox aus Fig. 8 in einem geschlossenen Zustand in einem Bereich eines Kabeleinlasses in einer Ansicht frontal von oben, und
- Fig. 11: eine teilweise Darstellung der Sicherheitsbox aus Fig. 8 in einem geschlossenen Zustand in einem Bereich eines Kabeleinlasses in einer Ansicht frontal von oben.

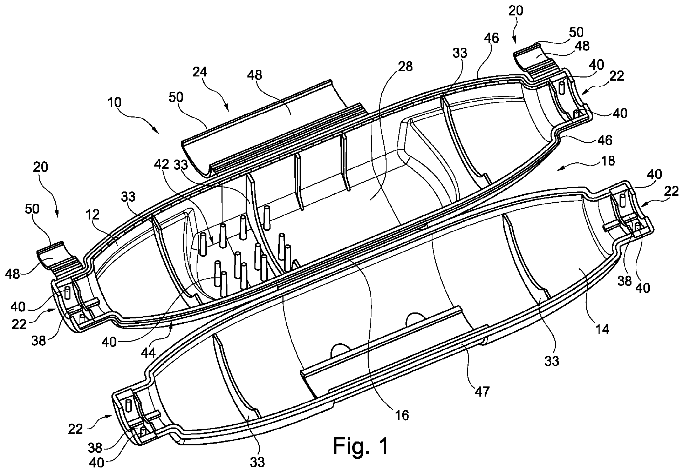

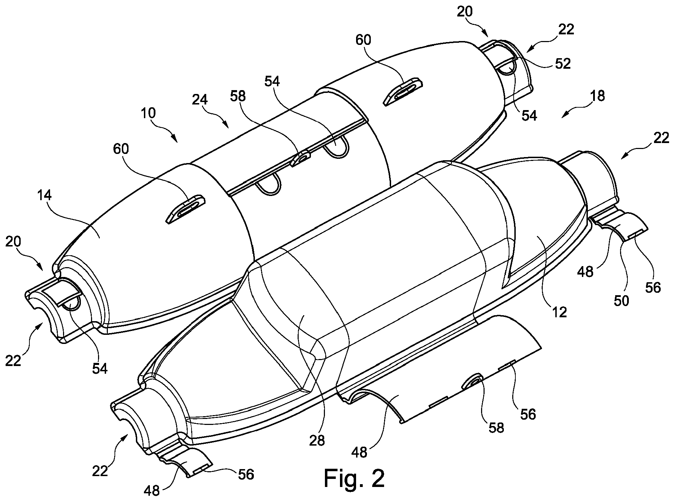

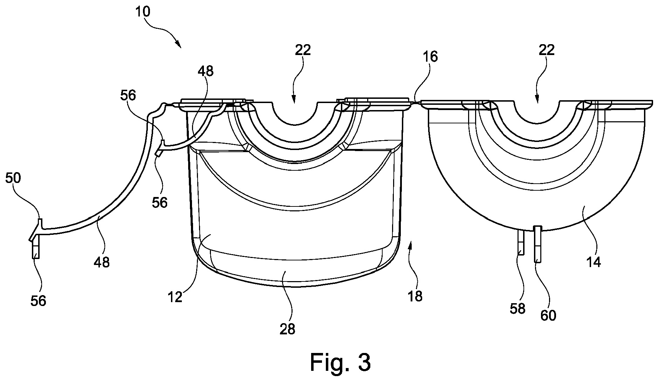

Die Figuren 1 bis 7 betreffen eine Sicherheitsbox 10 gemäß einer ersten, bevorzugten Ausführungsform.

Die Sicherheitsbox 10 ist in diesem Ausführungsbeispiel durch Spritzgießen aus Polypropylen (PP) hergestellt. Das Material der Sicherheitsbox 10 ist in diesem Ausführungsbeispiel halogenfrei und außerdem selbstverlöschend. Die Ausgestaltung halogenfrei und selbstverlöschend ist optional.

Die Sicherheitsbox 10 weist ein erstes und ein zweites Gehäuseteil 12, 14 auf, die hier als Gehäusehälften 12, 14 ausgeführt sind, die jeweils etwa 180° eines Kreisumfangs abdecken.

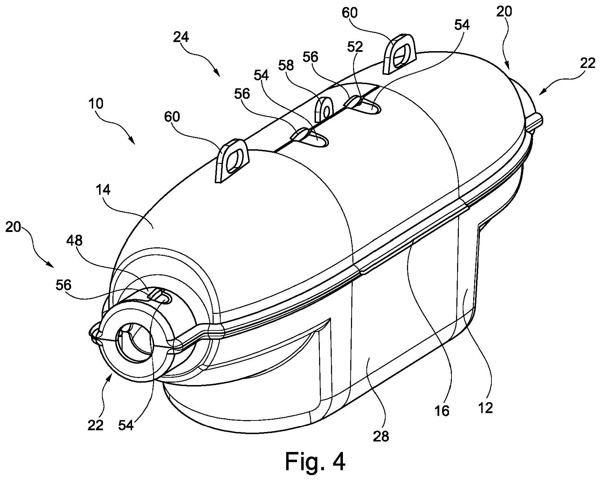

Die beiden Gehäusehälften 12, 14 sind hier über ein Filmscharnier 16 verschwenkbar aneinander gehalten. Die beiden Gehäusehälften 12, 14 sind zwischen einem geöffneten Zustand, der in den Figuren 1 bis 3 dargestellt ist, und einem geschlossenen Zustand, der in Fig. 4 dargestellt ist, verschwenkbar. Im geschlossenen Zustand sind die beiden Gehäusehälften 12, 14 zu einem wasserundurchlässigen Gehäuse 18 verbunden.

Das Gehäuse 18 weist an seinen Endbereichen 20 jeweils einen Kabeleinlass 22 auf. Das Gehäuse 18 weist in seinem Mittelbereich 24 zwischen den Kabeleinlässen 22 einen Querschnitt zur Aufnahme einer Steckerverbindung 26 und an den Kabeleinlässen 22 einen gegenüber dem Mittelbereich 24 reduzierten Querschnitt auf. Dabei verjüngt sich das Gehäuse 18 in Richtung zu den beiden Kabeleinlässen 22. Entsprechend weist das Gehäuse 18 in dem Mittelbereich 24 eine Auswölbung 28 auf.

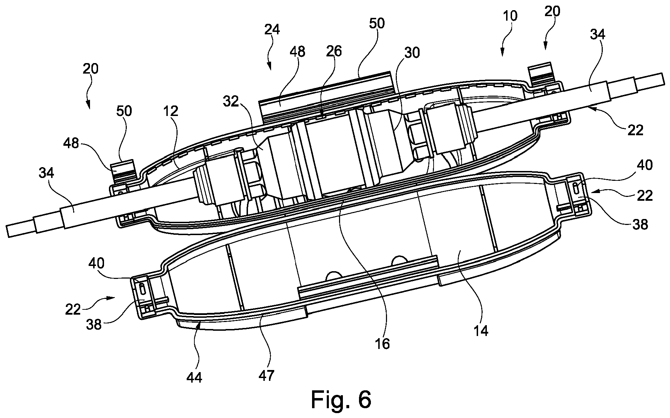

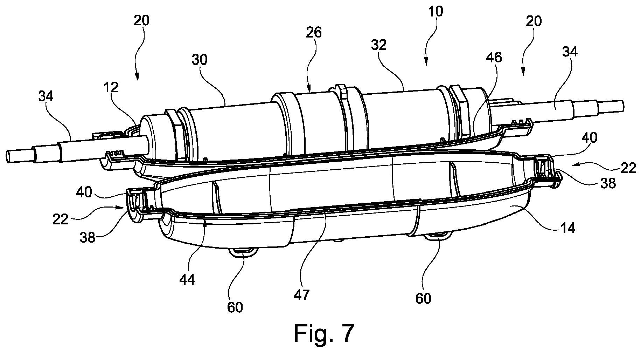

Die Sicherheitsbox 10 mit verschiedenen darin aufgenommenen Steckerverbindungen 26 ist in den Figuren 6 und 7 dargestellt. Die Steckerverbindung 26 umfasst einen Stecker 30 und eine korrespondierende Buchse 32, die im verbundenen Zustand die Steckerverbindung 26 bilden. Die Steckerverbindung 26 ist hier eine Steckerverbindung 26 für 380V/400V-Drehstrom mit drei Phasen. Zusätzlich weist die Steckerverbindung 26 einen Nullleiter und einen Schutzleiter auf, so dass sich eine Steckerverbindung 26 mit fünf Kontakten ergibt. In Übereinstimmung mit den Normen sind Stecker 30 und Buchse 32 der Steckerverbindung 26 nach CEE16 für 400V und 16A ausgeführt, wie in Fig. 6 dargestellt ist, nach CEE32 für 400V und 32A, wie in Fig. 7 dargestellt ist, oder nach CEE63 für 400V und 63A. Dabei ist die Auswölbung 28 zur Aufnahme einer Verschlussklappe der Buchse 32 der Steckerverbindung 26 ausgeführt. Das Gehäuse 18 umschließt die Steckerverbindung 26 im geschlossenen Zustand vollständig.

Weiter sind an dem ersten und dem zweiten Gehäuseteil 12, 14 innenseitig eine Mehrzahl Positionierelemente 33 ausgebildet, in der die Steckerverbindung 26 positionierbar ist. Die Positionierelemente 33 bilden eine Zugentlastung für die darin positionierte Steckerverbindung 26. Dazu sind sowohl der Stecker 30 als auch die Buchse 32 von einem Positionierelement 33 in Richtung zu dem jeweiligen Kabeleinlass 22 abgestützt. Außerdem ist die Steckerverbindung 26 zumindest für die in Fig. 7 dargestellte zweite Steckerverbindung 26 zuverlässig in den beiden Gehäusehälften 12, 14 abgestützt und formschlüssig in dem Gehäuse 18 gehalten. Die Positionierelemente 33 sind hier als Positionierstege 33 ausgeführt, die sich quer zu einer Längsachse der Steckerverbindung 26 erstrecken.

Stecker 30 und Buchse 32 sind jeweils an einem Ende eines Kabels 34 angebracht. Die Kabel 34 erstrecken sich durch die Kabeleinlässe 22 und kommen mit dort angeordneten Dichtelementen 36 in Anlage. Die Dichtelemente 36 sind jeweils in einer an dem jeweiligen Kabeleinlass 22 innenseitig ausgebildeten Dichtelementaufnahme 38 positioniert. Jede Dichtelementaufnahme 38 weist zwei parallel angeordnete Positionierstifte 40 auf, mit denen das Dichtelement 36 in der jeweiligen Dichtelementaufnahme 38 positioniert werden kann, wobei sich die Positionierstifte 40 in das Dichtelement 36 hinein erstrecken.

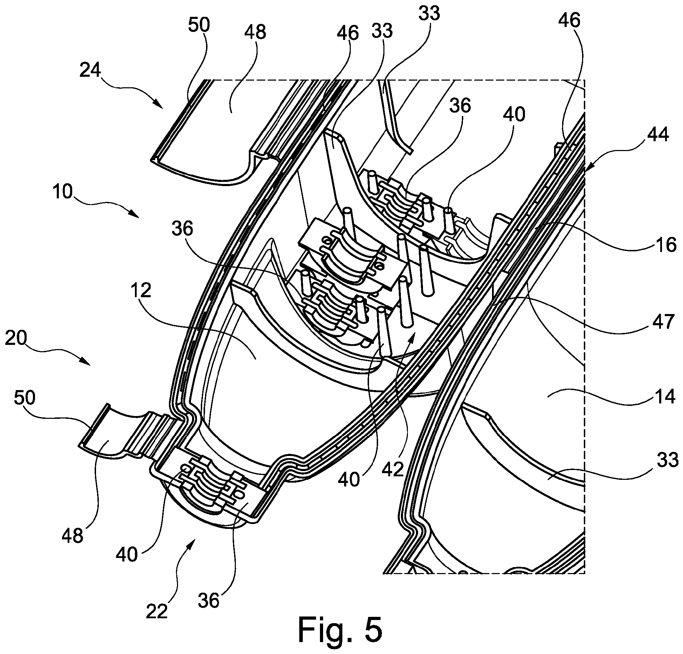

Zusätzlich sind an der ersten Gehäusehälfte 12 innenseitig eine Mehrzahl Halter 42 für jeweils ein Dichtelement 36 ausgebildet. Die Halter 42 sind in Fig. 1 ohne Dichtelemente 36 dargestellt. In Fig. 5 sind die Halter 42 teilweise mit darin gehaltenen Dichtelementen 36 dargestellt.

Die verschiedenen Dichtelemente 36 sind jeweils paarweise für die Benutzung mit unterschiedlichen Querschnitten der Kabel 34 ausgeführt.

Die Halter 42 umfassen in Übereinstimmung mit den Dichtelementaufnahmen 38 entsprechend geformte und ausgerichtete Positionierstifte 40, mit denen die Dichtelemente 36 in den Haltern 42 gehalten werden können. Entsprechend sind die Dichtelemente 36 in den Dichtelementaufnahmen 38 und den Haltern 42 zur Anpassung an unterschiedliche Kabelquerschnitte, für welche die Dichtelemente 36 ausgeführt sind, austauschbar. Dabei sind die Dichtelemente 36 der ersten und zweiten Gehäusehälfte 12, 14 an den jeweiligen Kabeleinlässen 22 identisch ausgeführt, so dass insgesamt vier einzelne Dichtelemente 36 für jeden der unterschiedlichen Kabelquerschnitte, die von der Sicherheitsbox 10 unterstützt werden, vorzuhalten sind.

Zusätzlich ist an dem ersten Gehäuseteil 12 eine Gehäusedichtung 44 angebracht, die eine Abdichtung des Gehäuses 18 im Bereich zwischen dem ersten und zweiten Gehäuseteil 12, 14 bewirkt. Die Gehäusedichtung 44 umfasst zwei Einzeldichtungen 46, die sich an dem ersten Gehäuseteil 12 an beiden Längsseiten zwischen den Dichtelementen 36 erstrecken. Zusammen mit den Dichtelementen 36 bilden die zwei Einzeldichtungen 46 eine umlaufende Dichtung, die mit korrespondierenden Dichtflächen 47 des zweiten Gehäuseteils 14 eine Abdichtung der Sicherheitsbox 10 im geschlossenen Zustand bilden.

An der ersten Gehäusehälfte 12 sind außenseitig insgesamt drei Befestigungslaschen 48 ausgeführt, die sich von einer Längsseite der ersten Gehäusehälfte 12 in einem verbundenen zustand in einem Winkel von etwa 90° in Umfangsrichtung um das Kabel 34 erstrecken. An den freien Enden der Befestigungslaschen 48 ist jeweils ein Eingriffselement 50 ausgebildet. In der zweiten Gehäusehälfte 14 ist jeweils korrespondierend dazu eine außenseitige Aussparung 52 ausgebildet. Die Eingriffselemente 50 und die korrespondierende Aussparungen 52 bilden Befestigungsmittel 50, 52, mit denen das erste und das zweite Gehäuseteil 12, 14 aneinander befestigbar sind. Eine der Befestigungslaschen 48 ist in dem Mittelbereich 24 des Gehäuses 18 angeordnet, und die beiden anderen Befestigungslaschen 48 an den Endbereichen 20 mit den Kabeleinlässen 22.

Zusätzlich weisen die Befestigungsmittel 50, 52 Trennmittel 54, 56 zum Trennen der Befestigungsmittel 50, 52 auf. Die Trennmittel 54, 56 umfassen hier eine Ausbuchtung 54, die an dem zweiten Gehäuseteil 14 jeweils im Bereich der Aussparung 52 ausgebildet ist, um den Eingriff des jeweiligen Eingriffselements 50 zu lösen. Zusätzlich umfassen die Trennmittel 54, 56 an den Eingriffselementen 50 angeformte Vorsprünge 56, die als Grifferleichterungen eine Betätigung des jeweiligen Eingriffselements 50 aus der Aussparung 52 erleichtern.

Weiter sind an dem ersten und dem zweiten Gehäuseteil 12, 14 außenseitig korrespondierende Sicherungsmittel 58 ausgebildet, mit denen das erste und das zweite Gehäuseteil 12, 14 gegen ein Öffnen des Gehäuses 18 gesichert werden können. Die Sicherungsmittel 58 sind hier als Sicherungsösen 58 ausgeführt, die an der Befestigungslasche 48 im Mittelbereich 24 der ersten Gehäusehälfte 12 und korrespondierend dazu an der zweiten Gehäusehälfte 14 ausgebildet sind. Durch Anbringen eines Vorhängeschlosses durch die beiden Sicherungsösen 58 hindurch kann das Gehäuse 18 gegen nicht autorisiertes Öffnen gesichert werden.

Außerdem sind hier an dem zweiten Gehäuseteil 14 Aufhängemittel 60 angebracht, die als Ösen 60 ausgeführt sind. In diesem Ausführungsbeispiel sind die Ösen 60 in axialer Richtung des Kabels 34 bzw. der Sicherheitsbox 10 beabstandet angeordnet sind.

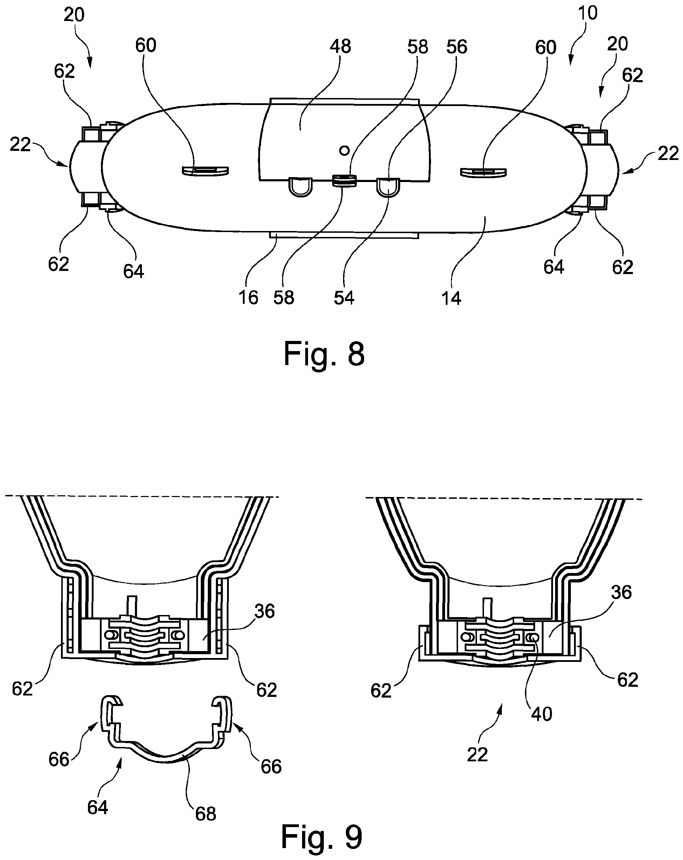

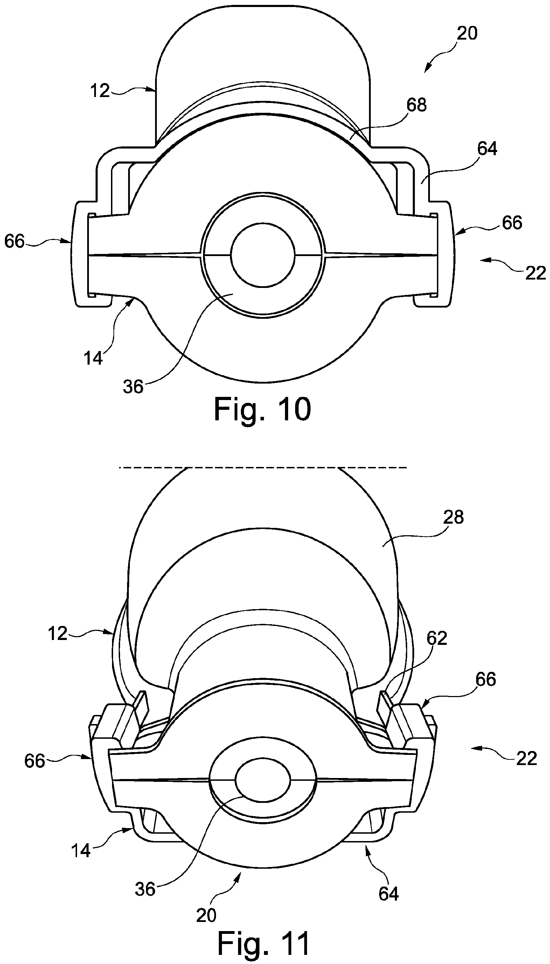

Die Figuren 8 bis 11 betreffen eine Sicherheitsbox 10 gemäß einer zweiten Ausführungsform. Die Sicherheitsbox 10 der zweiten Ausführungsform entspricht im Wesentlichen der Sicherheitsbox 10 der ersten Ausführungsform. Daher werden nachfolgend nur Unterscheide zwischen den beiden Sicherheitsboxen der ersten und zweiten Ausführungsform beschrieben. Nicht explizit angegebene Details entsprechen, soweit für den Fachmann nicht offensichtlich erkennbar, denen der ersten Ausführungsform. Entsprechend werden für gleichartige Teile die gleichen Bezugszeichen verwendet.

Die Sicherheitsbox 10 der zweiten Ausführungsform unterscheidet sich von der Sicherheitsbox 10 der ersten Ausführungsform durch die Ausgestaltung ihrer Endbereiche 20. Die beiden Gehäuseteile 12, 14 weisen an ihren Endbereichen 20 jeweils schienenartige Eingriffsmittel 62 auf, die sich in axialer Richtung parallel zu einer Längsachse der Sicherheitsbox 10 erstrecken. Die Eingriffsmittel 62 sind jeweils korrespondierend an beiden Gehäuseteilen 12, 14 in Verbindungsbereichen davon, in denen das erste und das zweite Gehäuseteil 12, 14 in Anlage kommen, ausgebildet.

Die Sicherheitsbox 10 umfasst weiterhin ein Klammerelement 64. Das Klammerelement 64 ist hier aus Kunststoff hergestellt und als separates Klammerelement 64 ausgeführt.

Das Klammerelement 64 weist an seinen beiden Enden eine Klaue 66 auf, die ausgeführt ist, jeweils die korrespondierenden Eingriffsmittel 62 an beiden Gehäuseteilen 12, 14 zu umgreifen. Die beiden Klauen 66 sind über einen Bügel 68 miteinander verbunden.

Das Klammerelement 64 an den Eingriffsmitteln 62 angebracht werden, indem es von außen auf die Eingriffsmittel 62 aufgeschoben wird. Dabei hintergreift das Klammerelement 64 die Eingriffsmittel 62, wodurch die beiden Gehäuseteile 12, 14 im Bereich des jeweiligen Kabeleinlasses 22 aneinander gehalten werden. Außerdem umgreift das Klammerelement 64 zwischen den beiden Klauen 66 eines der beiden Gehäuseteile 12, 14, so dass der Bügel 68 an diesem Gehäuseteil 12, 14 anliegt.

Außerdem kann das Klammerelement 64 von den Eingriffsmitteln 62 in Richtung der Auswölbung 28 geschoben werden. In diesem Zustand ist das Klammerelement 64 an einem der Gehäuseteile 12, 14 gehalten, verbindet diese aber nicht miteinander, wodurch das Klammerelement 64 unverlierbar an dem entsprechenden Gehäuseteil 12, 14 gehalten ist.

### Bezugszeichenliste

- Sicherheitsbox: 10
- erstes Gehäuseteil, erste Gehäusehälfte: 12
- zweites Gehäuseteil, zweite Gehäusehälfte: 14
- Filmscharnier: 16
- Gehäuse: 18
- Endbereich: 20
- Kabeleinlass: 22
- Mittelbereich: 24
- Steckerverbindung: 26
- Auswölbung: 28
- Stecker: 30
- Buchse: 32
- Positioniersteg, Positionierelement: 33
- Kabel: 34
- Dichtelement: 36
- Dichtelementaufnahme: 38
- Positionierstift: 40
- Halter: 42
- Gehäusedichtung: 44
- Einzeldichtung: 46
- Dichtfläche: 47
- Befestigungslasche: 48
- Eingriffselement, Befestigungsmittel: 50
- Aussparung, Befestigungsmittel: 52
- Ausbuchtung, Trennmittel: 54
- Vorsprung, Trennmittel: 56
- Sicherungsöse, Sicherungsmittel: 58
- Öse, Aufhängemittel: 60
- Eingriffsmittel: 62
- Klammerelement: 64
- Klaue: 66
- Bügel: 68

## Patentansprüche

1. Sicherheitsbox (10) zur wasserdichten Aufnahme einer Steckerverbindung (26), die aus einem Stecker (30) und einer korrespondierenden Buchse (32) im verbundenen Zustand gebildet ist, insbesondere für eine Steckerverbindung (26) für 380V/400V-Drehstrom mit drei Phasen, mit
einem ersten und einem zweiten Gehäuseteil (12, 14), die zu einem die Steckerverbindung (26) vollständig umschließenden Gehäuse (18) verbindbar sind und als Gehäusehälften (12, 14) ausgeführt sind, die jeweils etwa 180° eines Kreisumfangs abdecken,
wobei das Gehäuse (18) an seinen Endbereichen (20) jeweils einen Kabeleinlass (22) aufweist, durch den ein Kabel (34) der Steckverbindung (26) führbar ist,
wobei an dem ersten und/oder dem zweiten Gehäuseteil (12, 14) im Bereich der Kabeleinlässe (22) jeweils außenseitig Befestigungsmittel (50, 52) ausgebildet und/oder anbringbar sind, mit denen das erste und das zweite Gehäuseteil (12, 14) aneinander befestigbar sind,wobei
an den Kabeleinlässen (22) jeder Gehäusehälfte (12, 14) innenseitig jeweils ein Dichtelement (36) angeordnet ist, welches im verschlossenen Zustand eine Abdichtung des Gehäuses (18) an dem Kabel (34) bewirkt, wobei
an den Kabeleinlässen (22) jeder Gehäusehälfte (12, 14) innenseitig jeweils eine Dichtelementaufnahme (38) ausgebildet ist, und das jeweilige Dichtelement (36) austauschbar in der jeweilige Dichtmittelaufnahme (38) gehalten ist,
**dadurch gekennzeichnet, dass**
an dem ersten und dem zweiten Gehäuseteil (12, 14) jeweils Positionierstifte (40) ausgebildet sind, die sich in das jeweilige Dichtelement (36) hinein erstrecken.

2. Sicherheitsbox (10) nach Anspruch 1, **dadurch gekennzeichnet, dass**
die Befestigungsmittel (50, 52) ein Eingriffselement (50) und eine korrespondierende Aussparung (52) aufweisen, die entsprechend an dem ersten und zweiten Gehäuseteil (12, 14) ausgebildet sind.

3. Sicherheitsbox (10) nach Anspruch 2, **dadurch gekennzeichnet, dass**
das erste oder zweite Gehäuseteil (12, 14) eine Befestigungslasche (48) aufweist, die sich in einem Winkel von wenigstens etwa 90° in Umfangsrichtung um das Kabel (34) erstreckt, und
das Eingriffselement (50) oder die Aussparung (52) an einem freien Ende der Befestigungslasche (48) ausgebildet ist.

4. Sicherheitsbox (10) nach einem der Ansprüche 1 bis 3, **dadurch gekennzeichnet, dass**
die Befestigungsmittel (50, 52) Trennmittel (54, 56) zum Trennen der Befestigungsmittel (50, 52) aufweisen.

5. Sicherheitsbox (10) nach einem der vorhergehenden Ansprüche, **dadurch gekennzeichnet, dass**
die Befestigungsmittel (50, 52) Eingriffsmittel (62), die an dem ersten und/oder dem zweiten Gehäuseteil (12, 14) ausgebildet sind, und ein Klammerelement, das die Eingriffsmittel (62) in einem aneinander befestigten Zustand hintergreift und an dem ersten oder dem zweiten Gehäuseteil (12, 14) anliegt, aufweisen.

6. Sicherheitsbox (10) nach Anspruch 5, **dadurch gekennzeichnet, dass**
die Eingriffsmittel (62) schienenartig ausgebildet sind, und das Klammerelement durch eine axiale Verschiebung die Eingriffsmittel (62) hintergreift.

7. Sicherheitsbox (10) nach einem der vorhergehenden Ansprüche, **dadurch gekennzeichnet, dass**
das Gehäuse (18) in einem Mittelbereich (24) zwischen den Kabeleinlässen (22) einen Querschnitt zur Aufnahme der Steckerverbindung (26) und an den Kabeleinlässen (22) einen gegenüber dem Mittelbereich (24) reduzierten Querschnitt aufweist.

8. Sicherheitsbox (10) nach einem der vorhergehenden Ansprüche 6 oder 7, **dadurch gekennzeichnet, dass**
an dem ersten und/oder dem zweiten Gehäuseteil (12, 14) wenigstens ein Halter (42) für ein Dichtelement (36) ausgebildet ist.

9. Sicherheitsbox (10) nach einem der vorhergehenden Ansprüche, **dadurch gekennzeichnet, dass**
das erste und das zweite Gehäuseteil (12, 14) verschwenkbar aneinander gehalten sind.

10. Sicherheitsbox (10) nach einem der vorhergehenden Ansprüche, **dadurch gekennzeichnet, dass**
an dem ersten und/oder dem zweiten Gehäuseteil (12, 14) eine Gehäusedichtung (44) angebracht oder ausgebildet ist, die eine Abdichtung des Gehäuses (18) im Bereich zwischen dem ersten und zweiten Gehäuseteil (12, 14) bewirkt.

11. Sicherheitsbox (10) nach einem der vorhergehenden Ansprüche, **dadurch gekennzeichnet, dass**
an dem ersten und/oder dem zweiten Gehäuseteil (12, 14) innenseitig wenigstens ein Positionierelement (33) ausgebildet ist, in der die Steckerverbindung (26) positionierbar ist.

12. Sicherheitsbox (10) nach einem der vorhergehenden Ansprüche, **dadurch gekennzeichnet, dass**
an dem ersten und/oder dem zweiten Gehäuseteil (12, 14) innenseitig eine Mehrzahl Positionierelemente (33) ausgebildet sind, die eine Zugentlastung für die darin positionierte Steckerverbindung (26) bilden.

13. Sicherheitsbox (10) nach einem der vorhergehenden Ansprüche, **dadurch gekennzeichnet, dass**
an dem ersten und dem zweiten Gehäuseteil (12, 14) außenseitig korrespondierende Sicherungsmittel (58) ausgebildet sind, mit denen das erste und das zweite Gehäuseteil (12, 14) gegen ein Öffnen des Gehäuses (18) gesichert werden können.

## Claims

1. Security box (10) for receiving in a water-tight manner a plug connection (26) which is formed from a plug (30) and a corresponding socket (32) in the connected state, in particular for a plug connection (26) for a 380V/400V three-phase alternating current, having a first and a second housing part (12, 14) which are connectable so as to form a housing (18) that completely encloses the plug connection (26) and are embodied as housing halves (12, 14) which each cover approximately 180° of the circumference of a circle,
wherein the housing (18) on the end regions (20) thereof has in each case one cable inlet (22) through which a cable (34) of the plug connection (26) is able to be routed,
wherein configured and/or attachable externally on the first and/or the second housing part (12, 14) in the region of the cable inlets (22) are in each case fastening means (50, 52) by way of which the first and the second housing part (12, 14) are able to be fastened to each other, wherein disposed internally on the cable inlets (22) of each housing half (12, 14) is in each case one sealing element (36) which in the closed state causes sealing of the housing (18) on the cable (34), wherein configured internally on the cable inlets (22) of each housing half (12, 14) is in each case one sealing element receptacle (38), and the respective sealing element (36) is held so as to be replaceable in the respective sealing means receptacle (38),
**characterized in that**
positioning pins (40) which extend into the respective sealing element (36) are in each case configured on the first and the second housing part (12, 14).

2. Security box (10) according to Claim 1, **characterized in that** the fastening means (50, 52) have an engagement element (50) and a corresponding recess (52) which are correspondingly configured on the first and the second housing part (12, 14).

3. Security box (10) according to Claim 2, **characterized in that** the first or the second housing part (12, 14) has a fastening tab (48) which in the circumferential direction about the cable (34) extends at an angle of at least approximately 90°, and the engagement element (50) or the recess (52) is configured on a free end of the fastening tab (48) .

4. Security box (10) according to one of Claims 1 to 3, **characterized in that** the fastening means (50, 52) have separating means (54, 56) for separating the fastening means (50, 52).

5. Security box (10) according to one of the preceding claims, **characterized in that** the fastening means (50, 52) have engaging means (62) which are configured on the first and/or the second housing part (12, 14), and a clip element which engages behind the engaging means (62) in a state fastened to each other and bears on the first or the second housing part (12, 14).

6. Security box (10) according to Claim 5, **characterized in that** the engaging means (62) are configured in the manner of rails, and the clip element engages behind the engaging means (62) by way of an axial displacement.

7. Security box (10) according to one of the preceding claims, **characterized in that** the housing (18) in a central region (24) between the cable inlets (22) has a cross section for receiving the plug connection (26), and on the cable inlets (22) has a cross section that is reduced in comparison to the central region (24).

8. Security box (10) according to one of preceding Claims 6 or 7, **characterized in that** at least one holder (42) for a sealing element (36) is configured on the first and/or the second housing part (12, 14) .

9. Security box (10) according to one of the preceding claims, **characterized in that** the first and the second housing part (12, 14) are pivotably held on each other.

10. Security box (10) according to one of the preceding claims, **characterized in that** a housing seal (44) which causes sealing of the housing (18) in the region between the first and the second housing part (12, 14) is attached or configured on the first and/or the second housing part (12, 14).

11. Security box (10) according to one of the preceding claims, **characterized in that** configured internally on the first and/or the second housing part (12, 14) is at least one positioning element (33) in which the plug connection (26) is able to be positioned.

12. Security box (10) according to one of the preceding claims, **characterized in that** configured internally on the first and/or the second housing part (12, 14) are a plurality of positioning elements (33) which form a strain relief for the plug connection (26) positioned therein.

13. Security box (10) according to one of the preceding claims, **characterized in that** configured externally on the first and the second housing part (12, 14) are corresponding securing means (58) by way of which the first and the second housing part (12, 14) can be secured in relation to opening of the housing (18) .

## Revendications

1. Boîtier de sécurité (10) permettant de recevoir de manière étanche à l'eau une connexion enfichable (26) formée à l'état connecté d'une fiche (30) et d'une prise (32) correspondante, en particulier pour une connexion enfichable (26) pour un courant triphasé 380V/400V à trois phases, comprenant
une première et une deuxième partie de boîtier (12, 14) qui peuvent être reliées pour former un boîtier (18) enfermant entièrement la connexion enfichable (26) et sont réalisées sous forme de demi-boîtiers (12, 14) qui couvrent respectivement environ 180° d'une périphérie de cercle,
dans lequel le boîtier (18) présente au niveau de ses zones d'extrémité (20) respectivement une entrée de câble (22) à travers laquelle un câble (34) de la connexion enfichable (26) peut être guidé,
dans lequel, sur la première et/ou la deuxième partie de boîtier (12, 14), dans la zone des entrées de câble (22), des moyens de fixation (50, 52) sont réalisés et/ou peuvent être installés côté extérieur respectivement et permettent de fixer la première et la deuxième partie boîtier (12, 14) l'une à l'autre,
dans lequel, aux entrées de câble (22) de chaque demi-boîtier (12, 14), respectivement un élément d'étanchéité (36) est disposé côté intérieur qui provoque à l'état fermé une étanchéité du boîtier (18) au niveau du câble (34), dans lequel
aux entrées de câble (22) de chaque demi-boîtier (12, 14), respectivement un logement d'élément d'étanchéité (38) est réalisé côté intérieur, et l'élément d'étanchéité respectif (36) est maintenu de manière échangeable dans le logement de moyen d'étanchéité (38) respectif,
**caractérisé en ce que** sur la première et la deuxième partie de boîtier (12, 14), respectivement des goupilles de positionnement (40) sont réalisées qui s'étendent dans l'élément d'étanchéité (36) respectif.

2. Boîtier de sécurité (10) selon la revendication 1, **caractérisé en ce que** les moyens de fixation (50, 52) présentent un élément d'enclenchement (50) et un évidement correspondant (52) qui sont réalisés sur la première et la deuxième partie de boîtier (12, 14).

3. Boîtier de sécurité (10) selon la revendication 2, **caractérisé en ce que**
la première ou la deuxième partie de boîtier (12, 14) présente une patte de fixation (48) qui s'étend selon un angle d'au moins 90° dans la direction périphérique autour du câble (34), et
l'élément d'enclenchement (50) ou l'évidement (52) est réalisé à une extrémité libre de la patte de fixation (48).

4. Boîtier de sécurité (10) selon l'une quelconque des revendications 1 à 3, **caractérisé en ce que** les moyens de fixation (50, 52) présentent des moyens de séparation (54, 56) pour séparer les moyens de fixation (50, 52).

5. Boîtier de sécurité (10) selon l'une quelconque des revendications précédentes, **caractérisé en ce que** les moyens de fixation (50, 52) présentent des moyens d'enclenchement (62) qui sont réalisés sur la première et/ou la deuxième partie de boîtier (12, 14), et un élément d'attache qui saisit par l'arrière les moyens d'enclenchement (62) dans un état fixé les uns aux autres et est adjacent à la première ou à la deuxième partie de boîtier (12, 14).

6. Boîtier de sécurité (10) selon la revendication 5, **caractérisé en ce que** les moyens d'enclenchement (62) sont réalisés à la manière d'un rail, et l'élément d'attache saisit par l'arrière les moyens d'enclenchement (62) par une translation axiale.

7. Boîtier de sécurité (10) selon l'une quelconque des revendications précédentes, **caractérisé en ce que** le boîtier (18) présente dans une zone centrale (24) entre les entrées de câble (22) une section transversale pour recevoir la connexion enfichable (26) et présente aux entrées de câble (22) une section transversale réduite par rapport à la zone centrale (24) .

8. Boîtier de sécurité (10) selon l'une quelconque des revendications précédentes 6 ou 7, **caractérisé en ce que** sur la première et/ou la deuxième partie de boîtier (12, 14) au moins un support (42) pour un élément d'étanchéité (36) est réalisé.

9. Boîtier de sécurité (10) selon l'une quelconque des revendications précédentes, **caractérisé en ce que** la première et la deuxième partie de boîtier (12, 14) sont maintenues l'une contre l'autre de manière pivotante.

10. Boîtier de sécurité (10) selon l'une quelconque des revendications précédentes, **caractérisé en ce que** sur la première et/ou la deuxième partie de boîtier (12, 14) un joint de boîtier (44) est installé ou réalisé qui provoque une étanchéité du boîtier (18) dans la zone entre la première et la deuxième partie de boîtier (12, 14).

11. Boîtier de sécurité (10) selon l'une quelconque des revendications précédentes, **caractérisé en ce que** sur la première et/ou la deuxième partie de boîtier (12, 14), au moins un élément de positionnement (33) est réalisé côté intérieur dans lequel la connexion enfichable (26) peut être positionnée.

12. Boîtier de sécurité (10) selon l'une quelconque des revendications précédentes, **caractérisé en ce que** sur la première et/ou la deuxième partie de boîtier (12, 14), une pluralité d'éléments de positionnement (33) est réalisée côté intérieur et forme une décharge de traction pour la connexion enfichable (26) positionnée dans ceux-ci.

13. Boîtier de sécurité (10) selon l'une quelconque des revendications précédentes, **caractérisé en ce que** sur la première et la deuxième partie de boîtier (12, 14), des moyens de sécurisation (58) correspondants sont réalisés côté extérieur et permettent de sécuriser la première et la deuxième partie de boîtier (12, 14) contre l'ouverture du boîtier (18).
